# EUROPÄISCHE PATENTANMELDUNG

(11) **EP 4 395 123 A1**
(43) Veröffentlichungstag der Anmeldung: **03.07.2024**
(21) Anmeldenummer: 23150028.1
(22) Anmeldetag: 02.01.2023
(51) Int. Cl.: H02J 13/00

(54) **ELEKTRISCHE ANORDNUNG MIT SAMMELSCHIENE UND ELEKTRISCHEN ABZWEIGEN UND VERFAHREN ZU DEREN BETRIEB**

(71) Anmelder: Siemens Aktiengesellschaft, 80333 München (DE)
(72) Erfinder: Dufaure, Thierry, 12053 Berlin (DE); Englert, Heiko, 90559 Burgthann (DE); Flemming, Stefan, 90574 Roßtal-Buchschwabach (DE)
(74) Vertreter: Siemens Patent Attorneys

(57) **Zusammenfassung**

Die Erfindung bezieht sich auf eine elektrische Anordnung (10) mit einer Sammelschiene (20) und zumindest zwei elektrischen Abzweigen (30_1-30_N), wobei die zumindest zwei Abzweige (30_1-30_N) jeweils über eine zugeordnete Schalteinrichtung (40) an die Sammelschiene (20) angeschlossen sind und mit einer Abzweigsteuereinrichtung (IED 1-IED N) ausgestattet sind, die die dem jeweiligen Abzweig (30_1-30_N) zugeordnete Schalteinrichtung (40) ansteuern können, und die Abzweigsteuereinrichtungen (IED 1-IED N) außerdem jeweils dazu ausgestaltet sind, eine Abzweigspannungsinformation (Sv_1-Sv_N) zu bilden, die eine an dem jeweiligen Abzweig (30_1-30_N) anliegende Abzweigspannung beschreibt.

Erfindungsgemäß ist vorgesehen, dass zusätzlich eine Zentraleinrichtung (100) vorhanden ist, die an die zumindest zwei Abzweigsteuereinrichtungen (IED 1-IED N) angeschlossen ist und von diesen die Abzweigspannungsinformationen (Sv_1-Sv_N) erhält, die Zentraleinrichtung (100) derart ausgestaltet ist, dass sie gemäß einer vorgegebenen Auswahlvorgabe (AVG) eine einzige der zwei Abzweigsteuereinrichtungen (IED 1-IED N) auswählt und deren Abzweigspannungsinformation (Sv_1-Sv_N) als Sammelschienenspannungsinformation (S_s) an die zwei Abzweigsteuereinrichtungen (IED_1-IED_N) weiterleitet, und die zumindest zwei Abzweigsteuereinrichtungen (IED_1-IED_N) derart ausgestaltet sind, dass sie die ihnen zugeordnete Schalteinrichtung (40) in Abhängigkeit von der Sammelschienenspannungsinformation (S_s) der Zentraleinrichtung (100) ansteuern.

## Beschreibung

Die Erfindung bezieht sich auf eine elektrische Anordnung mit einer Sammelschiene und zumindest zwei elektrischen Abzweigen, wobei die zumindest zwei Abzweige jeweils über eine zugeordnete Schalteinrichtung an die Sammelschiene angeschlossen sind und mit einer Abzweigsteuereinrichtung ausgestattet sind, die die dem jeweiligen Abzweig zugeordnete Schalteinrichtung ansteuern können, und die Abzweigsteuereinrichtungen außerdem jeweils dazu ausgestaltet sind, eine Abzweigspannungsinformation zu bilden, die eine an dem jeweiligen Abzweig anliegende Abzweigspannung beschreibt.

Die Sammelschienenspannung wird bekanntermaßen als Prozessinformation für den Betrieb und die Überwachung von elektrischen Schaltanlagen in Nieder-, Mittel- und Hochspannungsnetzen verwendet. Zum Beispiel wird sie als Vergleichswert für die sogenannte Funktion "Synchrocheck" eingesetzt, bei der eine Synchronisationsprüfung zwischen der jeweiligen Abzweigspannung und der Sammelschienenspannung durchgeführt wird, bevor ein Abzweig elektrisch mit einer Sammelschiene verbunden wird bzw. entsprechende Schalteinrichtungen geschlossen werden. Die Funktion "Synchrocheck" wird also mit anderen Worten verwendet, um ein elektrisch synchrones Zusammenschalten zweier Netzabschnitte zu gewährleisten; dazu werden die Spannungswerte der beiden Netzabschnitte üblicherweise bzgl. der Einhaltung bestimmter Parameter verglichen.

Darüber hinaus ist eine Funktion "Sammelschienenspannungsnachbildung" bekannt, die in Schaltanlagen eingesetzt wird, in denen die Sammelschienen über keine eigenen Spannungswandler verfügen. Die Funktion "Sammelschienenspannungsnachbildung" bildet aus den in den Feldern der Abzweige physikalisch gemessenen Abzweigspannungen eine Ersatzsammelschienenspannungsinformation nach. Hierzu wird ein Referenzabzweig ausgewählt, der topologisch und elektrisch mit der Sammelschiene verbunden ist und somit mit der Sammelschienenspannung beaufschlagt ist. Die Abzweigspannung des Referenzabzweigs wird logisch als Sammelschienenspannung verwendet.

Der Erfindung liegt die Aufgabe zugrunde, eine mit einer Sammelschiene und zumindest zwei elektrischen Abzweigen ausgestattete elektrische Anordnung anzugeben, die einfach konfigurierbar ist und bei der eine Sammelschienenspannungsinformation besonders aufwandsarm gebildet werden kann.

Diese Aufgabe wird erfindungsgemäß durch eine Anordnung mit den Merkmalen gemäß Patentanspruch 1 gelöst; vorteilhafte Ausgestaltungen der erfindungsgemäßen Anordnung sind in Unteransprüchen angegeben.

Danach ist erfindungsgemäß vorgesehen, dass zusätzlich eine Zentraleinrichtung vorhanden ist, die an die zumindest zwei Abzweigsteuereinrichtungen angeschlossen ist und von diesen die Abzweigspannungsinformationen erhält, die Zentraleinrichtung derart ausgestaltet ist, dass sie gemäß einer vorgegebenen Auswahlvorgabe eine einzige der zwei Abzweigsteuereinrichtungen auswählt und deren Abzweigspannungsinformation als Sammelschienenspannungsinformation an die zwei Abzweigsteuereinrichtungen weiterleitet, und die zumindest zwei Abzweigsteuereinrichtungen derart ausgestaltet sind, dass sie die ihnen zugeordnete Schalteinrichtung in Abhängigkeit von der Sammelschienenspannungsinformation der Zentraleinrichtung ansteuern.

Ein wesentlicher Vorteil der erfindungsgemäßen Anordnung ist darin zu sehen, dass die Auswahl derjenigen Abzweigsteuereinrichtungen, deren Abzweigspannung als Sammelschienenspannung für die Anlagensteuerung herangezogen wird, zentral in der Zentraleinrichtung erfolgt und die Abzweigsteuereinrichtungen von der Auswahlentscheidung befreit sind. Weder müssen die Abzweigsteuereinrichtungen wissen, wie viele andere Abzweigsteuereinrichtungen an derselben Sammelschiene wie sie selbst angeschlossen sind, noch müssen sie deren Anschlusszustand an die Sammelschiene kennen.

Ein weiterer wesentlicher Vorteil der erfindungsgemäßen Anordnung besteht darin, dass eine Umkonfiguration der Anlage mit geringem Aufwand möglich ist. Sollen beispielsweise ein weiterer Abzweig und eine weitere Abzweigsteuereinrichtung an die Sammelschiene angeschlossen werden, so erfordert dies keine Neuparametrierung der übrigen Abzweigsteuereinrichtungen, sondern lediglich eine Neuparametrierung der Zentraleinrichtung. Die letztgenannte Zentraleinrichtung ermittelt stets die für die Abzweigsteuereinrichtungen relevante Sammelschieneninformation, sodass die Abzweigsteuereinrichtungen von Umkonfigurationen befreit bleiben können.

Vorteilhaft ist es, wenn jede der zumindest zwei Abzweigsteuereinrichtungen jeweils derart ausgestaltet ist, dass sie die Ansteuerung der ihr zugeordneten Schalteinrichtung sowohl in Abhängigkeit von der von der Zentraleinrichtung erhaltenen Sammelschienenspannungsinformation als auch in Abhängigkeit von der von ihr an die Zentraleinrichtung gelieferten Abzweigspannungsinformation durchführt, wobei sie ein Schließen der zugeordneten Schalteinrichtung unterbindet, wenn die Sammelschienenspannungsinformation und die eigene Abzweigspannungsinformation eine Asynchronität zwischen Sammelschienenspannung und Abzweigspannung über ein vorgegebenes Maß hinaus anzeigen.

Die Anordnung bildet vorzugsweise einen Bestandteil eines Energieautomatisierungssystems. Die Auswahlvorgabe wird der Zentraleinrichtung vorzugsweise von einer anderen Komponente des Energieautomatisierungssystems vorgegeben.

Alternativ oder zusätzlich kann die Zentraleinrichtung die Auswahlvorgabe unter Einbezug der Abzweigspannungsinformationen der Abzweigsteuereinrichtungen gemäß einer in der Zentraleinrichtung abgespeicherten Auswahlregel selbst bilden. Zu diesem Zwecke empfängt die Zentraleinrichtung vorzugsweise Schaltzustandsinformationen, die den jeweiligen Schaltzustand der Abzweige, also die Information, ob diese aktuell elektrisch mit der Sammelschiene verbunden sind oder nicht, angeben.

Die Zentraleinrichtung und die Abzweigsteuereinrichtungen stehen bevorzugt über einen Datenbus in Verbindung; die Abzweigspannungsinformationen und die Sammelschienenspannungsinformation werden vorzugsweise über den Datenbus übertragen.

Die Abzweigsteuereinrichtungen übermitteln ihre Abzweigspannungsinformationen bevorzugt jeweils in Datentelegrammen an die Zentraleinrichtung.

Die Zentraleinrichtung gibt die Abzweigspannungsinformation, die sie gemäß der vorgegebenen Auswahlvorgabe als Sammelschienenspannungsinformation an die Abzweigsteuereinrichtungen weiterleitet, vorzugsweise in Form eines sammelschienenbezogenen Datentelegramms aus.

Die Kommunikation auf dem Datenbus erfolgt vorzugsweise auf der Basis einer Prozessbus-Kommunikation nach IEC 61850.

Vorteilhaft ist es, wenn die Zentraleinrichtung als das sammelschienenbezogene Datentelegramm das Datentelegramm der ausgewählten Abzweigsteuereinrichtung als eigenes Datentelegramm an die Abzweigsteuereinrichtungen weiterleitet, indem sie in einem den Sender des Datentelegramms identifizierenden Telegrammfeld die Senderidentifikation der ausgewählten Abzweigsteuereinrichtung durch ihre eigene Senderidentifikation ersetzt und die übrigen Telegrammfelder unverändert lässt.

Alternativ kann in vorteilhafter Weise vorgesehen sein, dass die Zentraleinrichtung das sammelschienenbezogene Datentelegramm erzeugt, indem sie das Datentelegramm der ausgewählten Abzweigsteuereinrichtung mit Blick auf die Abzweigspannungsinformation und etwaiger diesbezüglicher Sekundärinformationen auswertet und mit der Abzweigspannungsinformation und den Sekundärinformationen ein Datentelegramm erzeugt, das bezüglich der Telegrammstruktur davon unabhängig ist, welche der Abzweigsteuereinrichtungen die ausgewählte Abzweigsteuereinrichtung ist und ob oder nicht sich die Datentelegramme der Abzweigsteuereinrichtungen hinsichtlich der Telegrammstruktur und/oder des Umfangs der in den Datentelegrammen enthaltenen Nutzinformationen untereinander unterscheiden.

Die Sammelschiene kann ein- oder mehrphasig sein und ein oder mehr starre oder flexible, insbesondere aus Drähten oder Seilen gebildete, Phasenleiter umfassen.

Ist die Sammelschiene mehrphasig, so enthalten die Abzweigspannungsinformationen und die Sammelschienenspannungsinformation vorzugsweise für jede der Phasen jeweils zumindest eine Phasenspannungsinformation.

Auch kann die Anordnung zusätzlich ein oder mehr weitere Sammelschienen umfassen.

Im Falle weiterer Sammelschienen können die zumindest zwei Abzweige zusätzlich auch an die weiteren Sammelschienen angeschlossen sein.

Beispielsweise können alle Abzweige oder nur Teilgruppen der Abzweige an alle weiteren Sammelschienen oder nur an Teilgruppen der weiteren Sammelschienen angeschlossen sein. Dabei können sich die Teilgruppen auch unterscheiden: Beispielsweise kann eine erste Teilgruppe der Abzweige an eine erste Teilgruppe der weiteren Sammelschienen und eine zweite Teilgruppe der Abzweige an eine zweite Teilgruppe der weiteren Sammelschienen angeschlossen sein.

Die erste und zweite Teilgruppe der Abzweige können beispielsweise gemeinsame Gruppenmitglieder umfassen; in entsprechender Weise können beispielsweise auch die erste und zweite Teilgruppe der Sammelschienen gemeinsame Gruppenmitglieder umfassen.

Die Sammelschiene ist vorzugsweise ohne Spannungsmesseinrichtung und ohne Spannungswandler ausgebildet, sodass eine unmittelbare Messung der Sammelschienenspannung ohne die Anbindung der Abzweige nicht möglich ist.

Auch ist es möglich, dass die Zentraleinrichtung ein Funktionsmodul, insbesondere Softwaremodul, aufweist, das die Zentraleinrichtung befähigt, auch die Funktion einer Abzweigsteuereinrichtung auszuüben; in einem solchen Falle kann eine Abzweigsteuereinrichtung eingespart werden.

Die Erfindung bezieht sich außerdem auf ein Verfahren zum Betreiben einer elektrischen Anordnung, die mit einer Sammelschiene und zumindest zwei elektrischen Abzweigen ausgestattet ist, die jeweils über eine zugeordnete Schalteinrichtung an die Sammelschiene angeschlossen sind und mit einer Abzweigsteuereinrichtung ausgestattet sind, die die dem jeweiligen Abzweig zugeordnete Schalteinrichtung ansteuern können, wobei im Rahmen des Verfahrens mit den Abzweigsteuereinrichtungen jeweils eine Abzweigspannungsinformation gebildet wird, die eine an dem jeweiligen Abzweig anliegende Abzweigspannung beschreibt. Erfindungsgemäß ist bezüglich eines solchen Verfahrens vorgesehen, dass mit einer Zentraleinrichtung, die an die zumindest zwei Abzweigsteuereinrichtungen angeschlossen ist und von diesen die Abzweigspannungsinformationen erhält, gemäß einer vorgegebenen Auswahlvorgabe eine einzige der zumindest zwei Abzweigsteuereinrichtungen ausgewählt wird und deren Abzweigspannungsinformation als Sammelschienenspannungsinformation an die zwei Abzweigsteuereinrichtungen weitergeleitet wird, und die zumindest zwei Abzweigsteuereinrichtungen die ihnen zugeordnete Schalteinrichtung in Abhängigkeit von der Sammelschienenspannungsinformation der Zentraleinrichtung ansteuern.

Die Erfindung wird nachfolgend anhand von Ausführungsbeispielen näher erläutert; dabei zeigen beispielhaft:
- Figur 1: Bestandteile eines Ausführungsbeispiels für eine erfindungsgemäße elektrische Anordnung, anhand derer beispielhaft auch erfindungsgemäße Verfahren erläutert werden,
- Figur 2: ein Ausführungsbeispiel für ein von einer Abzweigsteuereinrichtung der Anordnung gemäß Figur 1 erzeugtes Datentelegramm,
- Figur 3: ein Ausführungsbeispiel für ein Datentelegramm, das eine Zentraleinrichtung der Anordnung gemäß Figur 1 mit dem Datentelegramm der Abzweigsteuereinrichtung gemäß Figur 2 erzeugen kann,
- Figur 4: ein weiteres Ausführungsbeispiel für ein Datentelegramm, das die Zentraleinrichtung der Anordnung gemäß Figur 1 mit dem Datentelegramm der Abzweigsteuereinrichtung gemäß Figur 2 erzeugen kann,
- Figur 5: Bestandteile eines zweiten Ausführungsbeispiels für eine erfindungsgemäße elektrische Anordnung,
- Figur 6: eine bevorzugte Ausgestaltung der Zentraleinrichtung für das zweite Ausführungsbeispiel gemäß Figur 5, und
- Figur 7: Bestandteile eines dritten Ausführungsbeispiels für eine erfindungsgemäße elektrische Anordnung.

In den Figuren werden der Übersicht halber für identische oder vergleichbare Komponenten stets dieselben Bezugszeichen verwendet.

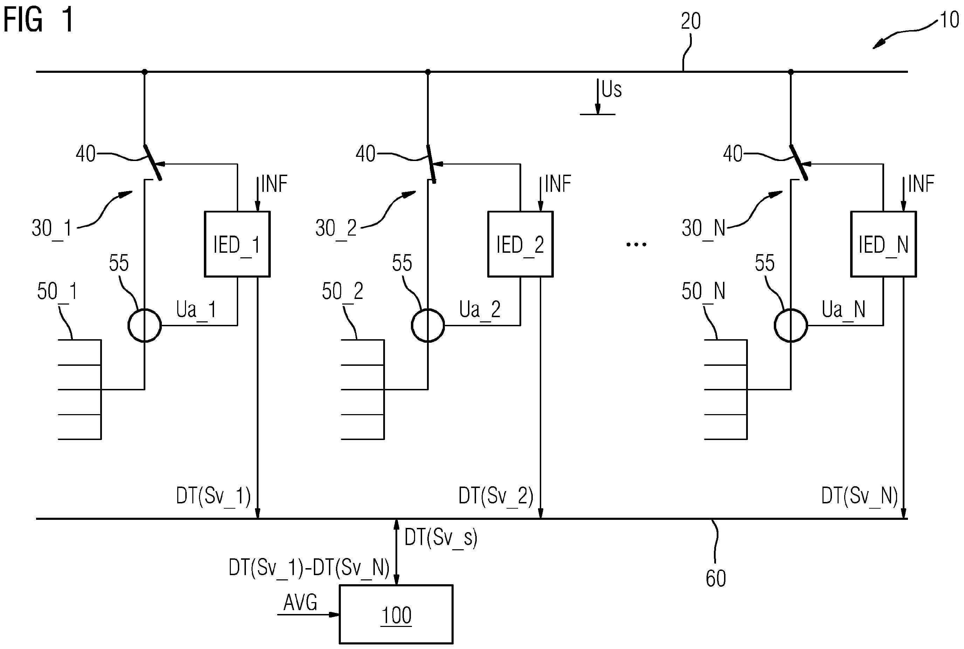

Die Figur 1 zeigt Bestandteile eines Ausführungsbeispiels für eine elektrische Anordnung 10, die eine Sammelschiene 20 und eine Vielzahl N an Abzweigen umfasst. Die Abzweige sind in der Figur 1 mit den Bezugszeichen 30_1, 30_2,...,30_N bezeichnet und jeweils über eine eigene Schalteinrichtung 40 an die Sammelschiene 20 angeschlossen. Die Schalteinrichtungen 40 sind elektrisch jeweils zwischen die Sammelschiene 20 und einen in der Figur 1 nicht weiter dargestellten Netzabschnitt 50_1, 50_2,...,50_N des jeweiligen Abzweigs 30_1, 30_2,...,30_N geschaltet.

Die Abzweige 30_1 bis 30_N umfassen jeweils eine Abzweigsteuereinrichtung, die in der Figur 1 mit dem Bezugszeichen IED_1 bis IED_N gekennzeichnet ist und vorzugsweise als intelligentes elektronisches Gerät ausgestaltet ist.

Die Abzweigsteuereinrichtungen IED_1 bis IED_N erfassen über Messeinrichtungen oder Messwandler 55 jeweils die am jeweiligen Abzweig und damit am jeweiligen Netzabschnitt 50_1, 50_2,...,50_N anliegende Abzweigspannung Ua_1, Ua_2,...,Ua_N.

Wenn die Schalteinrichtungen 40 geöffnet sind, wie es beispielsweise bei den Abzweigen 30_1 und 30_N in der Figur 1 der Fall ist, so sind diese Abzweige von der Sammelschiene 20 getrennt und die Abzweigspannungen Ua_1 und Ua N können von der an der Sammelschiene 20 anliegenden Sammelschienenspannung Us abweichen.

Wenn die Schalteinrichtungen 40 hingegen geschlossen sind, wie es anhand des zweiten Abzweigs 30_2 in der Figur 1 beispielhaft gezeigt ist, so sind diese Abzweige mit der Sammelschiene 20 leitend verbunden, sodass die jeweiligen Abzweigspannungen, in der Figur 1 also die Abzweigspannung Ua_2, und die Sammelschienenspannung Us gleich groß und synchron sind.

Die Abzweigsteuereinrichtungen IED_1 bis IED_N sind außerdem an einen Datenbus 60 angeschlossen und stehen über diesen mit einer Zentraleinrichtung 100 in Verbindung. Die Abzweigsteuereinrichtungen IED_1 bis IED_N können über den Datenbus 60 Datentelegramme DT an die Zentraleinrichtung 100 senden und von der Zentraleinrichtung 100 Datentelegramme DT erhalten.

Die Abzweigsteuereinrichtungen IED_1 bis IED_N können im Übrigen an weitere in der Figur 1 aus Gründen der Übersicht nicht weiter gezeigte Messwandler oder Messeinrichtungen angeschlossen sein und weitere Informationen verarbeiten, die in der Figur 1 mit dem Bezugszeichen INF markiert sind.

Die Anordnung gemäß Figur 1 kann beispielsweise wie folgt betrieben werden:
Die Abzweigsteuereinrichtungen IED_1 bis IED_N erfassen mit Hilfe ihrer Messeinrichtungen oder Messwandler 55 jeweils die an ihrem jeweiligen Abzweig 30_1, 30_2,...,30_N anliegende Abzweigspannung Ua_1 bis Ua_N und übertragen korrespondierende Abzweigspannungsinformationen Sv_1 bis Sv_N, die jeweils die am jeweiligen Abzweig 30_1, 30_2,...,30_N anliegende Abzweigspannung Ua 1 bis Ua_N beschreiben, an die Zentraleinrichtung 100. Bei den Abzweigspannungsinformationen Sv_1 bis Sv_N kann es sich beispielsweise um Abtastwerte handeln.

Vorteilhaft ist es, wenn die Übertragung der Abzweigspannungsinformationen Sv_1 bis Sv N im Rahmen der bereits erwähnten Datentelegramme DT erfolgt, beispielsweise in Übereinstimmung mit der Norm IEC 61850.

Die Zentraleinrichtung 100 empfängt also die Abzweigspannungsinformationen aller Abzweigsteuereinrichtungen IED_1 bis IED_N. Die Zentraleinrichtung 100 wählt eine der Abzweigsteuereinrichtungen IED_1 bis IED_N aus und leitet die Abzweigspannungsinformation dieser ausgewählten Abzweigsteuereinrichtung als eigene Sammelschienenspannungsinformation S_s an alle Abzweigsteuereinrichtungen IED_1 bis IED_N weiter.

Um nun zu gewährleisten, dass die Sammelschienenspannungsinformation S_s tatsächlich die an der Sammelschiene 20 anliegende Sammelschienenspannung Us beschreibt, sollte die ausgewählte Abzweigsteuereinrichtung eine solche sein, deren Schalteinrichtung 40 den Abzweig mit der Sammelschiene 20 verbindet, wie dies in der Figur 1 bei dem zweiten Abzweig 30_2 der Fall ist. Bei eingeschalteter Schalteinrichtung 40 misst nämlich die Messeinrichtung oder der Messwandler 55 nicht nur die jeweilige Abzweigspannung, sondern gleichzeitig auch die Sammelschienenspannung Us.

In der Figur 1 wird beispielhaft davon ausgegangen, dass die Schalteinrichtung 40 des zweiten Abzweigs 30_2 eingeschaltet ist und die Abzweigspannungsinformation Sv_2 der zweiten Abzweigsteuereinrichtung IED_2 somit geeignet ist, als Sammelschienenspannungsinformation S_s weitergeleitet zu werden. In entsprechender Weise können andere in der Figur 1 aus Gründen der Übersicht nicht gezeigte Abzweigsteuereinrichtungen mit eingeschalteter Schalteinrichtung 40 Abzweigspannungsinformationen an die Zentraleinrichtung 100 übermitteln, die ebenfalls die Sammelschienenspannung Us angeben und somit alternativ ebenfalls als Sammelschienenspannungsinformation S_s weitergeleitet werden könnten.

Welche der eingangsseitig vorliegenden Abzweigspannungsinformationen Sv_1 bis Sv_N die Zentraleinrichtung 100 schlussendlich als Sammelschienenspannungsinformation S_s weiterleitet, kann der Zentraleinrichtung 100 beispielsweise in Form einer externen Auswahlvorgabe AVG vorgegeben werden. Die externe Auswahlvorgabe AVG kann beispielsweise von einer Auswahlkomponente eines Energieautomatisierungssystems erzeugt werden, das die Anordnung 10 gemäß Figur 1 als Bestandteile umfasst.

Alternativ kann die Zentraleinrichtung 100 die Auswahl der Abzweigsteuereinrichtung, deren Abzweigspannungsinformation als Sammelschieneninformation S s weitergeleitet wird, gemäß einer intern abgespeicherten Auswahlregel selbst bestimmen. Bei der letztgenannten Variante ist es vorteilhaft, wenn der Zentraleinrichtung Schaltzustandsinformationen übermittelt werden, die den jeweiligen Schaltzustand der Abzweige, also die Information, ob die Schalteinrichtungen 40 gemäß Figur 1 geöffnet oder geschlossen sind und die jeweiligen Abzweige mit der Sammelschiene 20 elektrisch verbunden sind oder nicht, angeben. Die Schaltzustandsinformationen können beispielsweise von den Abzweigsteuereinrichtungen IED_1 bis IED_N übermittelt werden.

Nachfolgend werden beispielhaft zwei als besonders vorteilhaft angesehene Varianten näher beschrieben, gemäß derer die Weiterleitung der Abzweigspannungsinformation S_s der ausgewählten Abzweigsteuereinrichtung erfolgen kann; dabei wird beispielhaft davon ausgegangen, dass die Zentraleinrichtung 100 die zweite Abzweigsteuereinrichtung IED_2 ausgewählt hat und die Abzweigspannungsinformation Sv_2 der zweiten Abzweigsteuereinrichtung IED_2 als Sammelschieneninformation S_s = Sv_2 weiterleitet.

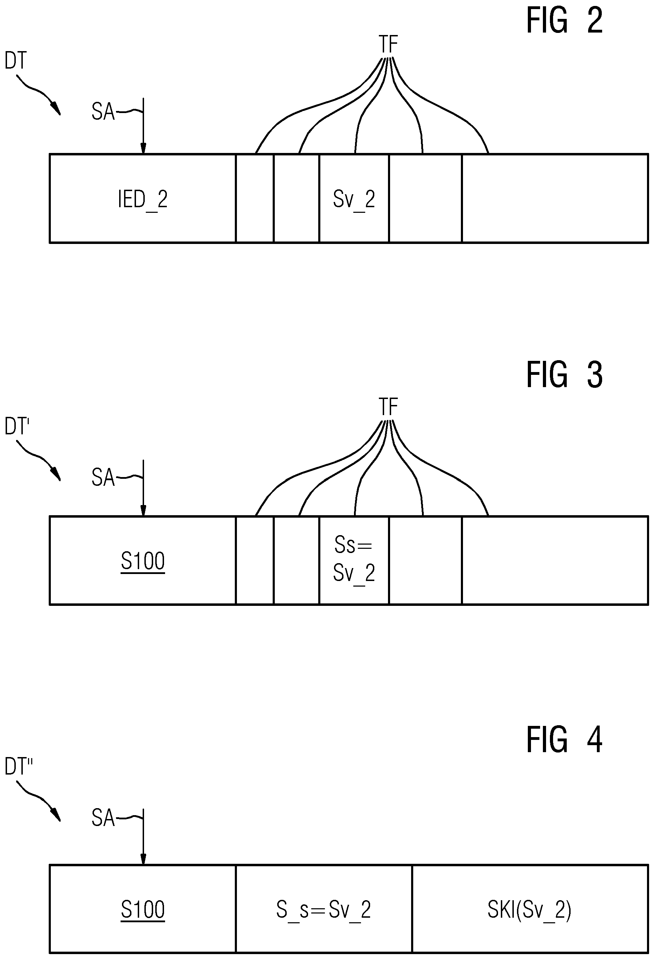

Gemäß einer ersten Variante leitet die Zentraleinrichtung 100 das von der zweiten Abzweigsteuereinrichtung IED_2 erhaltene Datentelegramm DT (vgl. Figur 2) mit der Abzweigspannungsinformation Sv_2 nur minimal verändert weiter, wobei sie lediglich ein die Senderangabe enthaltenes Sender-Telegrammfeld SA ändert und die die zweite Abzweigsteuereinrichtung IED 2 als Sender identifizierende Senderangabe durch die die Zentraleinrichtung 100 identifizierende Senderangabe S100 ersetzt. Alle übrigen Telegrammfelder TF bleiben bei dieser ersten Variante unverändert. Das nur minimal veränderte Datentelegramm ist in der Figur 3 mit dem Bezugszeichen DT' gekennzeichnet.

Unter Umständen können die Datentelegramme DT der ausgewählten Abzweigsteuereinrichtung IED_2 jedoch mehr Telegrammfelder TF und mehr Informationen enthalten, als die übrigen Abzweigsteuereinrichtungen benötigen oder verarbeiten können oder sollen. Gemäß einer anderen zweiten Variante (vgl. Figur 4) wird es daher als vorteilhaft angesehen, wenn die Zentraleinrichtung 100 die Datentelegramme DT der ausgewählten Abzweigsteuereinrichtung IED_2 bezüglich der sammelschienenrelevanten Informationen auswertet bzw. filtert und ein neues Datentelegramm DT" erzeugt, das von sammelschienenfremden Informationen befreit ist und beispielsweise lediglich die Abzweigspannungsinformation Sv2 der ausgewählten Abzweigsteuereinrichtung IED_2 und ggf. Sekundärinformationen SKI enthält, die sich auf die Abzweigspannungsinformation Sv2 beziehen. Die Sekundärinformationen SKI können beispielsweise Synchronisationsinformationen, Informationen über die zur Messung herangezogene Zeitbasis, Taktraten, Abtastraten, Sequenznummern, Datentelegrammnummern, Codierungsinformationen, Messgenauigkeiten usw. enthalten.

Die Figur 4 zeigt beispielhaft ein neues Datentelegramm DT", das die Zentraleinrichtung 100 durch Filtern bzw. Weiterverarbeiten des von der ausgewählten Abzweigsteuereinrichtung IED 2 erhaltenen Datentelegramms DT gemäß Figur 2 erzeugen kann. Das weitererarbeitete Datentelegramm DT" gemäß Figur 4 enthält lediglich die Senderidentifikation S100 der Zentraleinrichtung 100 im Sender-Telegrammfeld SA, die Abzweigspannungsinformation Sv2 der ausgewählten Abzweigsteuereinrichtung IED_2 als Sammelschienenspannungsinformation S s und die sich darauf beziehenden Sekundärinformationen SKI(Sv2).

Sobald die Abzweigsteuereinrichtungen 30_1 bis 30_N die Datentelegramme DT' bzw. DT" mit der Sammelschienenspannungsinformation S_s erhalten haben, können sie prüfen, ob sie ihre zugeordnete Schalteinrichtung 40 von der geöffneten Stellung in die geschlossene Stellung überführen können; ein Schließen der Schalteinrichtungen 40 erfolgt vorzugsweise nur dann, wenn die von der Zentraleinrichtung 100 gesendete Sammelschienenspannungsinformation S s anzeigt, dass die Sammelschienenspannung Us und die am eigenen Netzabschnitt 50_1, 50_2,...,50_N anliegende Abzweigspannung hinreichend synchron sind.

Die Sammelschiene 20 gemäß Figur 1 kann einphasig ausgestaltet sein und durch einen starren oder flexiblen Leiter gebildet sein, wie dies beispielhaft die Figur 1 zeigt; alternativ kann die Sammelschiene 20 mehrphasig ausgestaltet sein und durch zwei oder mehr starre oder flexible Leiter gebildet sein. Die obigen Ausführungen gelten für ein- und mehrphasige Sammelschienen 20 in gleicher Weise: Im Falle einer mehrphasigen Sammelschiene 20 sind die Abzweigspannungsinformationen Sv_1 bis Sv_N und die Sammelschienenspannungsinformationen mehrphasig und geben die entsprechenden Informationen jeweils für jede Phase individuell an.

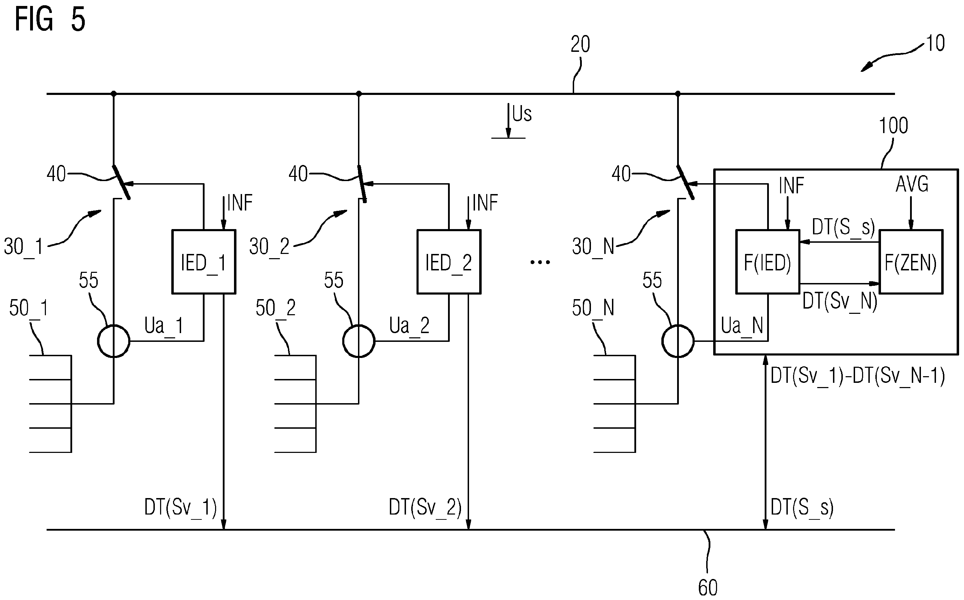

Die Figur 5 zeigt Bestandteile eines zweiten Ausführungsbeispiels für eine erfindungsgemäße elektrische Anordnung 10.

Bei der Anordnung 10 gemäß Figur 5 ist eine der Abzweigsteuereinrichtungen, beispielsweise die N-te Abzweigsteuereinrichtung IED_N, als Funktionsmodul F(IED) in die Zentraleinrichtung 100 integriert. Die oben im Zusammenhang mit der Figur 1 beschriebenen Funktionen der Zentraleinrichtung 100 werden von einem Funktionsmodul F(ZEN) der Zentraleinrichtung 100 ausgeführt.

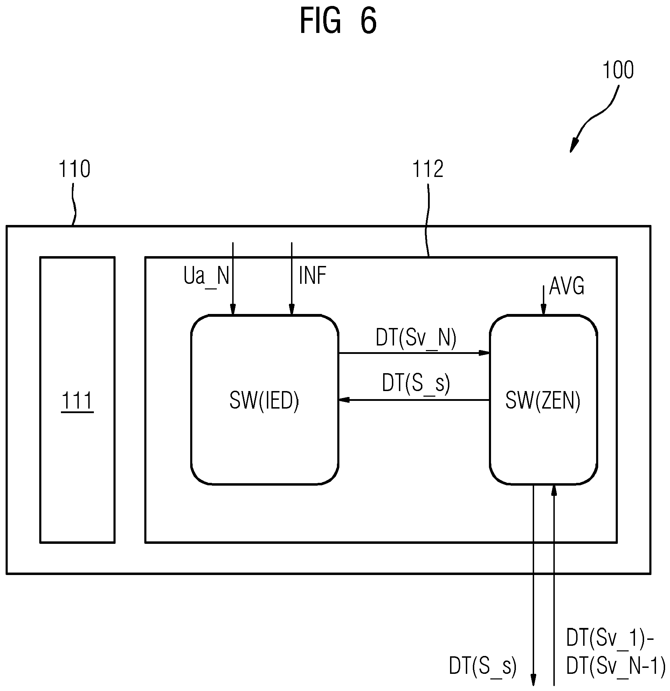

Die Figur 6 zeigt eine bevorzugte Ausgestaltung der Zentraleinrichtung 100 gemäß Figur 5. Die Zentraleinrichtung 100 gemäß Figur 5 umfasst eine Rechenanlage 110 mit einer Recheneinrichtung 111 und einem Speicher 112.

In dem Speicher 112 ist ein Softwaremodul SW(ZEN) abgespeichert, das bei Ausführung durch die Recheneinrichtung 111 das Funktionsmodul F(ZEN) der Zentraleinrichtung 100 gemäß Figur 5 und damit die Zentraleinrichtung 100 gemäß Figur 1 bildet.

In dem Speicher 112 ist außerdem ein Softwaremodul SW(IED) abgespeichert, das bei Ausführung durch die Recheneinrichtung 111 das Funktionsmodul F(IED) der Zentraleinrichtung 100 gemäß Figur 5 und damit die Abzweigsteuereinrichtung IED_N gemäß Figur 1 bildet.

Die interne Übertragung der Abzweigspannungsinformationen Sv_N zum Funktionsmodul F(ZEN) und die interne Übertragung der Sammelschienenspannungsinformation S s zum Funktionsmodul F(IED) kann in Datentelegrammen DT erfolgen, analog zur externen Übertragung dieser Informationen, oder in einem anderen internen Format.

Im Übrigen gelten die obigen Ausführungen im Zusammenhang mit den Figuren 1 bis 4 für das Ausführungsbeispiel gemäß den Figuren 5 und 6 entsprechend.

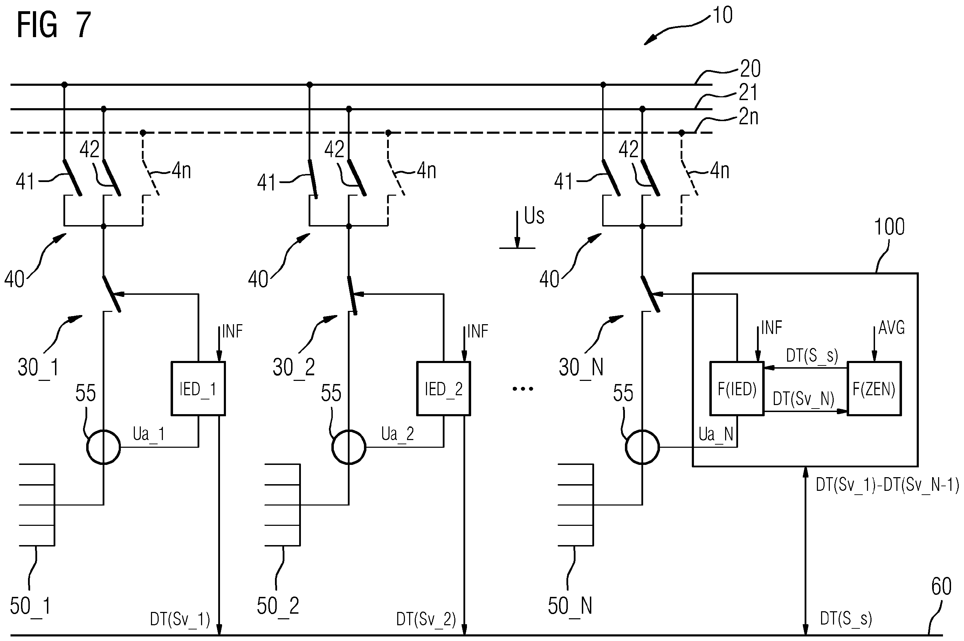

Die Figur 7 zeigt Bestandteile eines dritten Ausführungsbeispiels für eine erfindungsgemäße elektrische Anordnung 10.

Bei der Anordnung 10 gemäß Figur 7 sind zusätzlich zu der Sammelschiene 20 gemäß den Figuren 1 und 5 weitere Sammelschienen vorhanden, die mit den Bezugszeichen 21,...,2n (n ist eine natürliche Zahl größer als 1) gekennzeichnet sind.

Die Abzweige 30_1 bis 30_N stehen bei dem Ausführungsbeispiel gemäß Figur 7 jeweils mit jeder der Sammelschienen 20 bis 2n in Verbindung. Zu diesem Zwecke sind die Schalteinrichtungen 40 nicht nur mit einem einzigen umschaltbaren Schaltelement ausgestattet, wie dies bei den Ausführungsbeispielen gemäß den Figuren 1 und 5 der Fall ist, sondern zusätzlich mit weiteren sammelschienenbezogenen Schaltelementen, die in der Figur 7 mit den Bezugszeichen 41, 42,...,4n gekennzeichnet sind. Diese weiteren sammelschienenbezogenen Schaltelemente 41, 42,...,4n der Schalteinrichtungen 40 ermöglichen jeweils den individuellen Anschluss jedes der Abzweige 30_1 bis 30_N an jede der Sammelschienen 20 bis 2n.

Die Zentraleinrichtung 100 kann zu den Abzweigsteuereinrichtungen IED_1 bis IED_N für jede der Sammelschienen 20 bis 2n jeweils eine sammelschienenindividuelle Sammelschienenspannungsinformation S s separat übermitteln; alternativ kann jede der Sammelschienenspannungsinformationen S_s - sozusagen als Gruppeninformation - jeweils die Sammelschienenspannungen aller Sammelschienen 20 bis 2n definieren.

Im Übrigen gelten die obigen Ausführungen im Zusammenhang mit den Figuren 1 bis 6 für das Ausführungsbeispiel gemäß Figur 7 entsprechend. Beispielsweise führen die Abzweigsteuereinrichtungen IED 1-IED N die Ansteuerung der ihr zugeordneten Schalteinrichtung 40 vorzugsweise sowohl in Abhängigkeit von der von der Zentraleinrichtung 100 erhaltenen Sammelschienenspannungsinformation S s als auch in Abhängigkeit von der von ihnen an die Zentraleinrichtung 100 gelieferten Abzweigspannungsinformationen durch, wobei sie ein Schließen der zugeordneten Schaltelemente der Schalteinrichtung 40 jeweils unterbindet, wenn die diesbezüglichen Sammelschienenspannungsinformationen und die eigene Abzweigspannungsinformation eine Asynchronität zwischen der jeweiligen Sammelschienenspannung und der Abzweigspannung über ein vorgegebenes Maß hinaus anzeigen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

## Patentansprüche

1. Elektrische Anordnung (10) mit einer Sammelschiene (20) und zumindest zwei elektrischen Abzweigen (30 1-30 N), wobei
- die zumindest zwei Abzweige (30_1-30_N) jeweils über eine zugeordnete Schalteinrichtung (40) an die Sammelschiene (20) angeschlossen sind und mit einer Abzweigsteuereinrichtung (IED_1-IED_N) ausgestattet sind, die die dem jeweiligen Abzweig (30_1-30_N) zugeordnete Schalteinrichtung (40) ansteuern können, und
- die Abzweigsteuereinrichtungen (IED_1-IED_N) außerdem jeweils dazu ausgestaltet sind, eine Abzweigspannungsinformation (Sv_1-Sv_N) zu bilden, die eine an dem jeweiligen Abzweig (30_1-30_N) anliegende Abzweigspannung beschreibt, **dadurch gekennzeichnet, dass**
- zusätzlich eine Zentraleinrichtung (100) vorhanden ist, die an die zumindest zwei Abzweigsteuereinrichtungen (IED_1-IED_N) angeschlossen ist und von diesen die Abzweigspannungsinformationen (Sv_1-Sv_N) erhält,
- die Zentraleinrichtung (100) derart ausgestaltet ist, dass sie gemäß einer vorgegebenen Auswahlvorgabe (AVG) eine einzige der zwei Abzweigsteuereinrichtungen (IED 1-IED N) auswählt und deren Abzweigspannungsinformation (Sv_1-Sv_N) als Sammelschienenspannungsinformation (S_s) an die zwei Abzweigsteuereinrichtungen (IED 1-IED N) weiterleitet, und
- die zumindest zwei Abzweigsteuereinrichtungen (IED_1-IED_N) derart ausgestaltet sind, dass sie die ihnen zugeordnete Schalteinrichtung (40) in Abhängigkeit von der Sammelschienenspannungsinformation (S_s) der Zentraleinrichtung (100) ansteuern.

2. Anordnung (10) nach Anspruch 1,
**dadurch gekennzeichnet, dass**
jede der zumindest zwei Abzweigsteuereinrichtungen (IED_1-IED_N) jeweils derart ausgestaltet ist, dass sie die Ansteuerung der ihr zugeordneten Schalteinrichtung (40) sowohl in Abhängigkeit von der von der Zentraleinrichtung (100) erhaltenen Sammelschienenspannungsinformation (S_s) als auch in Abhängigkeit von der von ihr an die Zentraleinrichtung (100) gelieferten Abzweigspannungsinformation (Sv_1-Sv_N) durchführt,
wobei sie ein Schließen der zugeordneten Schalteinrichtung (40) unterbindet, wenn die Sammelschienenspannungsinformation (S_s) und die eigene Abzweigspannungsinformation (Sv_1-Sv_N) eine Asynchronität zwischen Sammelschienenspannung und Abzweigspannung über ein vorgegebenes Maß hinaus anzeigen.

3. Anordnung (10) nach einem der voranstehenden Ansprüche, **dadurch gekennzeichnet, dass**
- die Anordnung (10) einen Bestandteil eines Energieautomatisierungssystems bildet und
- die Auswahlvorgabe (AVG) von einer Komponente des Energieautomatisierungssystems an die Zentraleinrichtung (100) übermittelt wird.

4. Anordnung (10) nach einem der voranstehenden Ansprüche 1 bis 2,
**dadurch gekennzeichnet, dass**
die Zentraleinrichtung (100) die Auswahlvorgabe (AVG) unter Einbezug der Abzweigspannungsinformationen (Sv_1-Sv_N) der Abzweigsteuereinrichtungen (IED 1-IED N) gemäß einer in der Zentraleinrichtung (100) abgespeicherten Auswahlregel selbst bildet.

5. Anordnung (10) nach einem der voranstehenden Ansprüche, **dadurch gekennzeichnet, dass**
die Zentraleinrichtung (100) und die Abzweigsteuereinrichtung (IED_1-IED_N) über einen Datenbus (60) in Verbindung stehen und die Abzweigspannungsinformationen (Sv_1-Sv_N) und die Sammelschienenspannungsinformation (S_s) über den Datenbus (60) übertragen werden.

6. Anordnung (10) nach einem der voranstehenden Ansprüche,
**dadurch gekennzeichnet, dass**
die Abzweigsteuereinrichtungen (IED 1-IED N) ihre Abzweigspannungsinformationen (Sv_1-Sv_N) jeweils in Datentelegrammen (DT) an die Zentraleinrichtung (100) übermitteln.

7. Anordnung (10) nach Anspruch 6,
**dadurch gekennzeichnet, dass**
- die Zentraleinrichtung (100) die Abzweigspannungsinformation (Sv_1-Sv_N), die sie gemäß der vorgegebenen Auswahlvorgabe (AVG) als Sammelschienenspannungsinformation (S_s) an die Abzweigsteuereinrichtungen (IED 1-IED N) weiterleitet, in Form eines sammelschienenbezogenen Datentelegramms (DT) ausgibt.

8. Anordnung (10) nach Anspruch 7,
**dadurch gekennzeichnet, dass**
- die Zentraleinrichtung (100) als das sammelschienenbezogene Datentelegramm (DT) das Datentelegramm (DT) der ausgewählten Abzweigsteuereinrichtung (IED_1-IED_N) als eigenes Datentelegramm (DT') an die Abzweigsteuereinrichtungen (IED_1-IED_N) weiterleitet,
- indem sie in einem den Sender des Datentelegramms (DT) identifizierenden Telegrammfeld (SA) die Senderidentifikation der ausgewählten Abzweigsteuereinrichtung (IED_1-IED_N) durch ihre eigene Senderidentifikation ersetzt und die übrigen Telegrammfelder (TF) unverändert lässt.

9. Anordnung (10) nach Anspruch 7,
**dadurch gekennzeichnet, dass**
- die Zentraleinrichtung (100) das sammelschienenbezogene Datentelegramm (DT) erzeugt, indem sie das Datentelegramm (DT) der ausgewählten Abzweigsteuereinrichtung (IED_1-IED_N) mit Blick auf die Abzweigspannungsinformation (Sv_1-Sv_N) und etwaiger diesbezüglicher Sekundärinformationen (SKI) auswertet und mit der Abzweigspannungsinformation (Sv_1-Sv_N) und den Sekundärinformationen (SKI) ein Datentelegramm (DT") erzeugt, das von der Telegrammstruktur davon unabhängig ist, welche der Abzweigsteuereinrichtungen (IED 1-IED N) die ausgewählte Abzweigsteuereinrichtung (IED 1-IED N) ist und ob oder nicht sich die Datentelegramme (DT) der Abzweigsteuereinrichtungen (IED 1-IED N) hinsichtlich der Telegrammstruktur und/oder des Umfangs der in den Datentelegrammen (DT) enthaltenen Nutzinformationen untereinander unterscheiden.

10. Anordnung (10) nach einem der voranstehenden Ansprüche, **dadurch gekennzeichnet, dass**
- die Anordnung zusätzlich ein oder mehr weitere Sammelschienen (21-2n) umfasst und
- die zumindest zwei Abzweige (30_1-30_N) jeweils über ihre zugeordnete Schalteinrichtung (40) auch an die weiteren Sammelschienen (21-2n) oder zumindest eine Teilgruppe der weiteren Sammelschienen (21-2n) angeschlossen sind.

11. Anordnung (10) nach einem der voranstehenden Ansprüche, **dadurch gekennzeichnet, dass**
die Sammelschiene (20) ein- oder mehrphasig ist und ein oder mehr starre oder flexible, insbesondere aus Drähten oder Seilen gebildete, Phasenleiter umfasst.

12. Anordnung (10) nach einem der voranstehenden Ansprüche, **dadurch gekennzeichnet, dass**
die Sammelschiene (20) bezüglich der Sammelschienenspannung (Us) messeinrichtungsfrei ausgebildet ist und die Sammelschienenspannung (Us) ausschließlich durch Spannungsnachbildung aus Abzweigspannungsinformationen (Sv_1-Sv_N) ermittelbar ist.

13. Anordnung (10) nach einem der voranstehenden Ansprüche, **dadurch gekennzeichnet, dass**
die Zentraleinrichtung (100) ein Funktionsmodul (F(IED)), insbesondere Softwaremodul (SW(IED)), aufweist, dass die Zentraleinrichtung (100) befähigt, die Funktion einer der Abzweigsteuereinrichtungen (IED_1-IED_N) auszuüben.

14. Verfahren zum Betreiben einer elektrischen Anordnung (10), die mit einer Sammelschiene (20) und zumindest zwei elektrischen Abzweigen (30_1-30_N) ausgestattet ist, die jeweils über eine zugeordnete Schalteinrichtung (40) an die Sammelschiene (20) angeschlossen sind und mit einer Abzweigsteuereinrichtung (IED 1-IED N) ausgestattet sind, die die dem jeweiligen Abzweig (30_1-30_N) zugeordnete Schalteinrichtung (40) ansteuern können,
- wobei im Rahmen des Verfahrens mit den Abzweigsteuereinrichtungen (IED 1-IED N) jeweils eine Abzweigspannungsinformation (Sv_1-Sv_N) gebildet wird, die eine an dem jeweiligen Abzweig (30_1-30_N) anliegende Abzweigspannung beschreibt,
**dadurch gekennzeichnet, dass**
- mit einer Zentraleinrichtung (100), die an die zumindest zwei Abzweigsteuereinrichtungen (IED_1-IED_N) angeschlossen ist und von diesen die Abzweigspannungsinformationen (Sv_1-Sv_N) erhält, gemäß einer vorgegebenen Auswahlvorgabe (AVG) eine einzige der zumindest zwei Abzweigsteuereinrichtungen (IED 1-IED N) ausgewählt wird und deren Abzweigspannungsinformation (Sv_1-Sv_N) als Sammelschienenspannungsinformation (S_s) an die zwei Abzweigsteuereinrichtungen (IED 1-IED N) weitergeleitet wird, und
- die zumindest zwei Abzweigsteuereinrichtungen (IED_1-IED_N) die ihnen zugeordnete Schalteinrichtung (40) in Abhängigkeit von der Sammelschienenspannungsinformation (S_s) der Zentraleinrichtung (100) ansteuern.
